## Europäisches Patentamt

(19) **European Patent Office**

**Office européen des brevets**

(11) Publication number: **0 042 683**

**B1**

(12) **EUROPEAN PATENT SPECIFICATION**

(45) Date of publication of patent specification: **18.12.85**

(51) Int. Cl.⁴: **G 01 N 1/22, G 01 N 30/00**

(21) Application number: **81302486.6**

(22) Date of filing: **04.06.81**

(54) **Process for the production of adsorptive gas traps.**

(30) Priority: **24.06.80 GB 8020635**

(43) Date of publication of application:
**30.12.81 Bulletin 81/52**

(45) Publication of the grant of the patent:
**18.12.85 Bulletin 85/51**

(84) Designated Contracting States:
**DE FR NL SE**

(56) References cited:
**FR-A-2 084 317**
**GB-A-2 011 802**
**US-A-3 579 305**
**US-A-3 834 125**
**US-A-4 046 014**
**US-A-4 127 386**
**US-A-4 170 901**

(73) Proprietor: **NATIONAL RESEARCH DEVELOPMENT CORPORATION**
**101 Newington Causeway**
**London SE1 6BU (GB)**

(72) Inventor: **Thompson, John Michael**
**22 Greenside**
**Harborne Birmingham B17 0BT (GB)**
Inventor: **Sithamparanadarajah, Rajadurai**
**123 Reservoir Road**
**Selly Oak Birmingham 29 (GB)**
Inventor: **Stephen, William Irvine**
**85 Oakfield Road**
**Selly Park Birmingham B29 9HL (GB)**

(74) Representative: **Parker, Geoffrey**
**Patent Department National Research Development Corporation 101 Newington Causeway**
**London SE1 6BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 042 683

**Description**

This invention relates to a process for the production of adsorptive traps for use in monitoring gases and vapours present in atmospheres, usually at low concentration.

The atmosphere present at some work places, such as operating theatres and chemical plants, contain minor proportions of gases which are potentially harmful to workers, especially on prolonged exposure. For instance, laboratory studies have shown that exposure of animals to low concentrations of anaesthetic gases produces embryo-toxic effects, and surveys of female operating theatre staff have indicated an increase in the frequency of spontaneous abortion and foetal abnormalities. It is thus desirable to monitor the exposure of workers to such potential hazardous materials, and indeed in many countries there are legal requirements to monitor the personal exposure of employees to potential toxic gases and vapours during their time at work.

A variety of monitoring devices are currently available for monitoring exposure to gases and vapours using either biological or personal monitoring techniques, the latter techniques relying upon a sampling of the air in the employee's breathing zone using, for example, a device which traps the toxic contaminants for subsequent analysis by an appropriate technique such as gas chromatography. Both active and passive trapping devices may be used, passive devices being dependent upon sampling of the contaminated atmosphere by diffusion, whereas active sampling involves activated passage of a sample of the contaminated atmosphere, either continuously or intermittently, through the trap by suitable means such as a battery operated sampling pump. Trapping of the contaminants may be by either adsorption or molecular sieving.

Passive sampling devices, which are generally in the form of a badge or holder containing an adsorption material such as charcoal cloth or charcoal impregnated cloth, are generally less capable of yielding an accurate and precise estimate of personal exposure than active samping devices. Passive devices are often at best only semi-quantitative and sampling rates vary from one contaminant to another, being dependent upon the inverse of the square root of the molecular weight of the contaminant, amongst other factors.

A typical example of the active adsorptive trap devices currently available is the kind approved by the United States of America, National Institute of Occupational Safety and Health (NIOSH). These are in the form of a glass tube containing a particulate adsorption material, such as charcoal or silica gel, packed in the tube in two sections including a front section which is retained between an inner porous polyurethane foam plug and an outer glass wool plug which is held in place by means of a V-shaped spring clip, and a smaller rear section retained between the inner foam and a further, outer polyurethane foam disc. These NIOSH approved traps are used on a once-only basis, contaminants trapped in the adsorbent being recovered for analysis by solvent extraction techniques, usually with methanol or carbon disulphide, the latter of which is highly toxic. The trap is generally discarded after use.

It has been found that traps produced in this last way can give poor precision of results and this is believed to be attributable in large part to the occurrence of channelling in the adsorbents, the adsorbents being relatively loosely packed and retained in a manner which is susceptible to further loosening of the packing.

More recently in the prior art it has been proposed, in US—A—4046014 and GB—A—2011802, that channelling may be avoided by packing the adsorbent in a compressive manner between two porous discs which are rigidly fixed in position. This approach is applicable to traps of small size suited to bodily carriage for personal monitoring and is said, in one instance, to provide a trap which is re-useable not withstanding repeated handling in use and shipment.

Nevertheless this more recent prior art proposal is not necessarily free from limitations. A tight packing will increase the flow resistance through the trap and this obviously may occur with a compressed packing. Also some adsorbent materials may be too weak to withstand a desired compression.

As an alternative solution to the channelling problem, which alternative avoids the limitations of compressive packing, the invention proposes a process for the production of a re-useable personally-portable trap which process comprises the steps stated in the first part of Claim 1 and is characterised by the steps of fixing one of the two porous discs in the tube of the trap, then packing the adsorbent against said one disc by vibration for a predetermined period of time, and thereafter dropping the other disc onto the adsorbent and then fixing this other disc to the tube to hold the adsorbent in the state to which it was packed by vibration.

In this connection it is to be noted that vibration packing of adsorbent is known in the production of chromatographic columns and other apparatus which is of large size compared to that under discussion, and which is not re-useable, as shown by US—A—4127386, for example.

Even so, traps produced in accordance with the present proposal have been found to give improved accuracy and precision of results when compared with the previously discussed NIOSH approved trap.

The traps produced in accordance with the invention are widely applicable to the monitoring of materials in general which are present in atmospheres as gases or vapours, by methods in which the sampled atmosphere is passed through the adsorbent in the tube by means of a suitable pumping or entrainment system. Also, while the traps have a primary suitability for use in personal monitoring, such as

2

in respect of the exposure of operating theatre and chemical plant staff to relatively small concentrations of potentially harmful gases and vapours, the traps can be used for biological or fixed site monitoring.

For biological monitoring applications, a measured volume of exhaled air may be collected from an individual in a sampling bag and then subsequently passed through the adsorptive trap, for instance, using a personal sampling pump, or alternatively, the person to be monitored may exhale a measured volume of air through the adsorptive trap. Provided the substances trapped from the exhaled air are not metabolised, or are metabolised in a predictable fashion, the quantity of substances trapped from a measured volume of air can be related more directly to the past exposure of the individual and to the biological response to that exposure.

It will be appreciated that the form and materials of construction of the traps may be varied widely in accordance with the particular application for which the trap is intended but subject, as already indicated, to provision in a suitable size and shape to be carried conveniently by the worker, for instance attached to external clothing. However, the trap tubes are not normally of internal diameter below about an eighth of an inch (about 3 mm) to avoid undesirably high resistance to gaseous flow through the tubes. The length of the tubes may be determined by the amount of absorbent and other packing required, which may in turn depend among other things upon the nature of the gaseous contaminant being monitored and the particle size of the absorbent. It has been found, for example, that tubes of length about 4 to 8 cm and internal diameter of about 3 to 5 mm packed with about 0.5 g of adsorbent, e.g. Porapak Q of 50 to 80 mesh and occupying a length of about 5 cm in the tube, are suitable for personal monitoring for over a period of about 10 hours at a gas sampling rate of about 2 to 5 ml/minute.

Any suitable material may be used for the tubes, including metals, such as copper or nickel, or preferably stainless steel. In cases where there is a possibility of the contaminant which is being monitored interacting with metals, glass or silica tubes may be used, though metal tubes are usually preferred in view of their greater impact resistance.

Any suitable form of porous disc may be used, provided it is able to maintain the adsorbent in place in the tube, and also does not cause excessive resistance to gaseous flow through the tube. Thus the discs may comprise porous sintered powder discs e.g. sintered powdered stainless steel, nickel or glass discs.

Preferably the discs comprise metal gauze or mesh discs, especially sintered metal gauze or mesh discs e.g. sintered stainless steel or nickel gauze discs. Advantageously the surfaces of the discs which are in contact with the adsorbent, and especially both surfaces of each disc, are substantially planar and fixed perpendicularly to the tube walls, to encourage the establishment of substantially uniform gaseous flow across the cross-section of the tube.

An adhesive or bonding agent may be used to fix the discs in place in the tube. For instance, discs may be fixed in silica or glass tubes by coating the edges of the discs with an adhesive layer or aqueous silicate solution, e.g. $Na_2SiO_3$, which acts by forming covalent, ionic and hydrogen bonding links between the edge of the discs and the wall of the tube. Preferably, however, discs are fixed in the tubes with the aid of thermal contraction and expansion. For instance, an oversize metal or plastic porous sintered disc may be cooled so as to contract thereby enabling it to be loosely fitted within the tube at the desired position, the disc then being permitted to warm up to room temperature and expand as it does so. Being of a diameter, at room temperature, greater than the internal diameter of the tube, the disc presses hard against the tube wall and is fixed rigidly in position by compressive forces. The coolant which is used may be, for example, liquid nitrogen. Alternatively the tube may be heated to expand and subsequently cool and contract around the oversize discs, although this method is less desirable than the cooling method.

It will be appreciated that the nature of the adsorbent used in the tubes may be varied widely, for instance, in accordance with the substances which are being monitored. Thus, for example the adsorbent in particulate form, may comprise charcoal or silica gel. Also silicate based adsorbents may be used, such as Silicalite and Zeolites, especially Zeolite 5A and 13X. Preferred adsorbents also comprise porous polymer adsorbents, such as the Porapak series, Chromosorb (Registered Trade Mark) Century series and Tenax GC adsorbents. Charcoal may be used for adsorption of highly volatile organic materials and also nitrous oxide when the flow rate through the tube is sufficiently low, e.g. about 2 ml/minute. Zeolite 5A may be used for adsorption of a wide range of organic and inorganic gases and vapours e.g. nitrous and nitric oxide, and sulphur dioxide. Porous polymer adsorbents and Silicalite may be used for adsorption of organic materials of moderate to low volatility.

The tubes may contain more than one adsorbent, the adsorbents being typically separated from one another by intervening rigidly fixed porous discs. Generally, also, separate tubes containing different adsorbents may be used in series. Such use of pluralities of adsorbents may be advantageous if the atmosphere being sampled is likely to contain various different types of gas or vapour which it is desired to monitor.

In a preferred embodiment the traps of the invention contain protective layers of dessicant at either end of the tube to protect the adsorbents against the effect of water, which can adversely affect the adsorptive capacity of the adsorbent as well as interfere with subsequent gas chromatographic analysis of trapped materials. A preferred dessicant for this purpose is Zeolite 3A. In a preferred construction the dessicant is held against the outer surfaces of the porous discs at either end of the tube and is suitably replaceably held in place by removable glass wool plugs.

In use the trap is connected to a suitable pump or gas entrainment system and sampled atmosphere is passed through the tube. The pump used is typically capable of reliably sampling at a low to moderate flow rate, e.g. from about 2 to 100 ml/minute, although higher flow rate pumps may be used for fixed site monitoring, and it will be appreciated that the flow rate of the pump may be varied in accordance with the quantity of adsorbent, the nature of the gas to be adsorbed, and size of tube used.

The connectors used for connecting the traps in the gas flow system are typically gas-tight connectors. For example, mechanical screw-threaded connectors, preferably having gas threads, or other types of quick connections connectors may be used. Such connectors may also be used in a plug form to seal the tubes after monitoring and before assay of adsorbed substances.

Subsequent to trapping, adsorbed substances may be recovered and assayed by any suitable method. Solvent extraction may be used but heat desorption is particularly preferred for recovery of adsorbed substances. For example, oxygen is first of all flushed out of the tubes, e.g. by passing a stream of oxygen-free nitrogen through the tube for a few seconds, and the tube is heated to desorb the substances which are then flushed out of the tube and assayed. In a preferred method of assay the desorbed gases are passed to a gas chromatography system for assay.

It has been found that the adsorptive traps produced according to the present invention generally give improved reproducibility of results when compared with prior art active adsorptive traps in which the adsorbent is not held packed in place between rigidly fixed porous discs. Generally also the traps produced according to the invention are particularly suited for thermal desorption recovery of adsorbed substances, which advantageously avoids the use of toxic solvents such as carbon disulphide. Furthermore the traps of the invention may be used again on a plurality of occasions after thermal desorption of adsorbates and need not be discarded after a single use.

The invention is further described by way of illustration only in the following examples and description which refer to the accompanying diagrams, wherein:

Figure 1 shows a sectional elevation of a simple form of trap produced according to the invention, and

Figure 2 shows a similar view of a more complex form of trap comprising two tubes in combination.

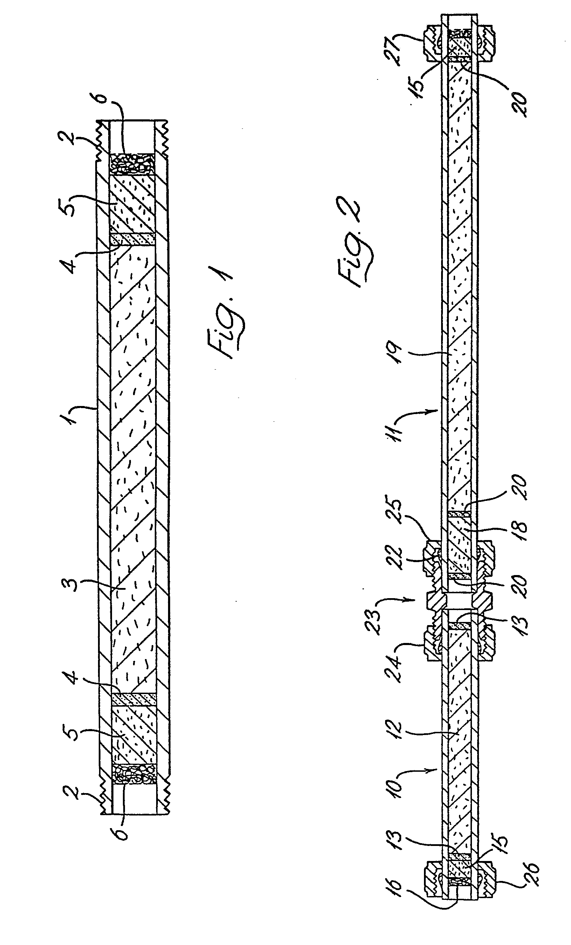

With reference to Figure 1 a simple form a trap according to the present invention comprises a stainless steel tube 1 of length 6 cm, external diameter 6.25 mm, and internal diameter 4 mm, having external gas-tight screw-threads 2 at either end thereof. The tube 1 contains a 4 cm length of packed Porapak Q adsorbent (supplied by Waters Associates) sandwiched between a pair of rigidly fixed, planar, sintered, oversize, 316 stainless steel gauze discs 4 which are perpendicular to the tube walls. 5 mm lengths of Zeolite 3A dessicant 5 are held in place against the outer faces of the discs 4 by removable glass wool plugs 6.

In use the tube 1 is connected to a gas flow system by way of suitable connectors (not shown) which mate with the screw-threaded portions 2. The tube is supplied with sampled atmosphere by means of a suitable sampling pump, such as the MDA Accuhaler 808 personal sampling pump, at a flow rate of about 2 ml/minute. At completion of sampling, the tube 1 is disconnected from the gaseous flow system and its ends are closed by means of screw-threaded caps (not shown). The adsorbed gases are then thermally desorbed by heating to 180°C after flushing out any oxygen present in the tube with oxygen-free nitrogen for 10 seconds at a flow rate of 60 ml/minute. The desorbed gases are flushed from the tube to a gas chromatography system for assay.

The tube of Figure 1 was manufactured as follows:

External gas threads 2 are cut on the ends of the length of stainless steel tube 1. The tube is then supported in a vertical orientation and an oversize sintered stainless steel mesh disc previously cooled in liquid nitrogen is dropped into the tube onto a support which supports it loosely at its required position. On warming up to room temperature the disc expands and presses hard against the walls of the tube and is thus held firmly in position.

Adsorbent is then introduced to the tube and packed against the fixed disc, whereafter a second oversize porous disc 4, similarly previously cooled in liquid nitrogen is dropped into the tube on top of the adsorbent and expands on warming to become fixed in place hard against the adsorbent. In this way the adsorbent is held firmly packed within the tube.

Porous glass discs may be fixed in glass tubes by use of an adhesive. The porous glass discs, which are slightly smaller in diameter than the internal diameter of the tube have their edges treated with a thin layer of aqueous silicate solution, e.g. sodium silicate, and the treated discs are then dropped into the glass tube and the silicate acts as an adhesive firmly bonding the edge of the discs to the wall of the tube.

Figure 2 shows a more complex form of trap which is particularly suitable for monitoring operating theatre atmospheres and compriss two stainless steel tubes 10 and 11 in combination. The first tube 10, of length about 5 cm, contains a 4 cm packed length of Porapak Q 12 (0.4 g, 50 to 80 mesh) sandwiched between a pair of rigidly fixed oversize (4.8±0.3 mm diameter, 1.09 mm thickness) sintered 316 stainless steel gauze discs 13 (cut from 316 sintered stainless steel gauze, supplied by Sintered Products, Sutton in Ashfield, UK). A layer of Zeolite 3A dessicant 15 (30 mg, 20 to 40 mesh) is held against the outer face of the disc 13 at the free end of tube 10 by a glass wool plug 16. The second tube 11, of length about 10 cm, contains lengths of two separate adsorbents 18 and 19 sandwiched side-by-side between rigidly fixed sintered stainless steel gauze discs 20 the same as those in tube 10. The first adsorbent 18 comprises an approximate 1 cm length of activated coconut charcoal (100 mg, 20 to 40 mesh), and the second adsorbent comprises an approximately 8 cm length of Zeolite 5A (1.5 g, 20 to 40 mesh). A layer of Zeolite 3A dessicant (30 mg, 20 to 40 mesh) is held against the outer surface of the disc 20 nearest the free end of the tube 11.

Both tubes 10 and 11 have Gyrolok connectors, compression olives 22 being attached to the exterior of each end of each tube. The tubes are connected by way of a Gyrolok union 23 and Gyrolok hexagonal nuts 24 and 25 attached to the fixed ends of tubes 10 and 11 respectively. The free ends of the tubes 10 and 11 also have Gyrolok hexagonal nuts 26 and 27 which together with Gyrolok caps (not shown) can be used to seal the trap after use, or together with other appropriate fittings (not shown) can be used to connect the trap to a suitable sampling system.

Example 1

Comparison of trichloroethylene recovery from prior art traps and traps produced according to the invention

58 Prior art adsorption traps of the NIOSH approved type obtained from four different commercial suppliers and 54 adsorption traps according to the invention were exposed to atmospheres containing 1,000 $\mu$gl$^{-1}$ of trichloroethylene for approximately 25 minutes each. The rate at which air was drawn through the traps, in each case, was 2 ml minute$^{-1}$ using a MDA Accuhaler 808 personal sampling pump. Each pump was calibrated by sampling at 2 ml minute$^{-1}$ for an accurately measured volume of air (500 ml). A record was kept of the number of pump strokes, and hence the volume sampled through each trap. The NIOSH traps were analysed as follows:

The front charcoal adsorbent section of each trap was emptied into a vial containing 0.5$\pm$0.01 ml CS$_2$ and the vial then capped immediately and shaken. One $\mu$l aliquot of the vial contents was injected into a Pye (Registered Trade Mark) 204 gas chromatograph for analysis, the column temperature being 80°C, the detector temperature 200°C, and the injection port temperature 110°C. The chromatographic column was packed with 10% w/w DC560 on universal support and oxygen-free nitrogen was used as carrier gas at a flow rate of 60 ml minute$^{-1}$. The flame ionization detector was set to a sensitivity setting of 16×10×1 to give a detectability of 0.01 trichloroethylene. The CS$_2$ solvent peak did not interfere with the trichloroethylene peak. The results obtained are given below in Table I.

TABLE I

Recoveries from commercially obtained charcoal traps in percentages of original loading (supplied from diffusion dilution cell)

| Commercial supplier | A | B | C | | | | D | | | |
|---|---|---|---|---|---|---|---|---|---|---|
| Trap number | | | | | | | | | | |
| 1 | 107 | 92 | 1 | 102 | 11 | 90 | 1 | 94 | 11 | 98 |
| 2 | 86 | 102 | 2 | 106 | 12 | 94 | 2 | 91 | 12 | 86 |
| 3 | 88 | 86 | 3 | 94 | 13 | 89 | 3 | 105 | 13 | 101 |
| 4 | 100 | 89 | 4 | 87 | 14 | 94 | 4 | 103 | 14 | 84 |
| 5 | 96 | 104 | 5 | 105 | 15 | 98 | 5 | 102 | 15 | 100 |
| 6 | 100 | 94 | 6 | 104 | 16 | 84 | 6 | 92 | 16 | 102 |
| 7 | 94 | 86 | 7 | 101 | 17 | 86 | 7 | 98 | 17 | 96 |
| 8 | 98 | 98 | 8 | 101 | 18 | 102 | 8 | 93 | 18 | 86 |
| 9 | 94 | 90 | 9 | 86 | | | 9 | 100 | 19 | 88 |
| 10 | 83 | 94 | 10 | 87 | | | 10 | 105 | 20 | 96 |
| Mean | 94.6 | 93.5 | 95 | | | | 96 | | | |
| Standard deviation | 9.6 | 5.9 | 7.3 | | | | 6.4 | | | |
| a/o rel. st. dev. | 7.3 | 6.3 | 7.6 | | | | 6.6 | | | |

Overall mean: 95% recovery; standard deviation: 6.7%; % rel. standard dev.: 7.1%.

**0 042 683**

Adsorbed trichloroethylene was recovered from the traps produced according to the invention by thermal desorption after prior removal of oxygen by flushing with oxygen-free nitrogen. The desorbed trichloroethylene was assayed by flushing into the chromatography and analysis as described previously for the $CS_2$ extracted material. The results obtained are given below in Table II and the ensuing statistical analysis.

TABLE II
Recoveries from the traps produced according to the invention

| Trap No. | % Recovery | Trap No. | % Recovery | Trap No. | % Recovery |
|---|---|---|---|---|---|
| 1 | 98 | 19 | 101 | 37 | 100 |
| 2 | 103 | 20 | 96 | 38 | 96 |
| 3 | 96 | 21 | 100 | 39 | 99 |
| 4 | 96 | 22 | 98 | 40 | 101 |
| 5 | 102 | 23 | 103 | 41 | 103 |
| 6 | 96 | 24 | 97 | 42 | 100 |
| 7 | 103 | 25 | 100 | 43 | 99 |
| 8 | 105 | 26 | 98 | 44 | 97 |
| 9 | 98 | 27 | 98 | 45 | 105 |
| 10 | 96 | 28 | 101 | 46 | 96 |
| 11 | 94 | 29 | 100 | 47 | 98 |
| 12 | 100 | 30 | 100 | 48 | 101 |
| 13 | 98 | 31 | 98 | 49 | 99 |
| 14 | 96 | 32 | 96 | 50 | 97 |
| 15 | 98 | 33 | 99 | 51 | 101 |
| 16 | 100 | 34 | 94 | 52 | 96 |
| 17 | 96 | 35 | 102 | 53 | 99 |
| 18 | 99 | 36 | 99 | 54 | 98 |

mean recovery=98.8%; standard deviation: 2.57; % rel. st. dev.: 2.6.
column conditions etc. as for NIOSH trap test. Desorption temperature 180°C.

Analysis of variance
(a) 4 classes of charcoal traps, 1 class of traps produced according to the invention.

Variance table:

| | Degrees of freedom | Variance |
|---|---|---|
| Between classes | 4 | 114.8 |
| Within classes | 108 | 24.3 |

Variance ratio F=4.72

(b) 1 class of charcoal traps (4 classes combined), 1 class of traps of the invention.

6

Variance table:

| | Degrees of freedom | Variance |
|---|---|---|
| Between classes | 1 | 459.3 |
| Within classes | 111 | 23.4 |

Variance ratio F=19.65

Difference significant at 0.001.

Kolmogoro-Smirnov two-sample test:
One sided version and two-sided version

| % Recovery | Number in class | | Cumulative number in class | |
|---|---|---|---|---|
| | NIOSH | Invention | NIOSH | Invention |
| <90 | 16 | 0 | 16 | 0 |
| 90—91 | 3 | 0 | 19 | 0 |
| 92—93 | 3 | 0 | 22 | 0 |
| 94—95 | 8 | 2 | 30 | 2 |
| 95—97 | 3 | 14 | 33 | 16 |
| 98—99 | 3 | 17 | 38 | 33 |
| 100—101 | 7 | 13 | 45 | 46 |
| >100 | 13 | 8 | 58 | 54 |

Cumulative frequency to class and including class

| % Recovery | NIOSH | Invention | Difference | Absolute difference |
|---|---|---|---|---|
| <90 | 0.276 | 0 | 0.276 | 0.276 |
| 90—91 | 0.328 | 0 | 0.328 | 0.328 |
| 92—93 | 0.378 | 0 | 0.378 | 0.378 |
| 94—95 | 0.517 | 0.037 | 0.480 | 0.480 |
| 96—97 | 0.569 | 0.296 | 0.273 | 0.273 |
| 98—99 | 0.655 | 0.611 | 0.044 | 0.044 |
| 100—101 | 0.776 | 0.852 | 0.076 | 0.076 |
| >101 | 1.000 | 1.000 | — | — |

Two-sided Test $D=$maximum $S_{NIOSH}-S_{T/S}=0.480$, $p \ll 0.01$
One-sided Test $D=$maximum positive difference$=0.480$, $p \ll 0.005$.

This confirms the significant difference as tested by parametric analysis of variance (b) above.
From these results it is concluded that there is a very significant improvement in percentage recovery using the traps produced according to the invention together with the thermal desorption method.
The percentage recoveries of other organic vapours from the traps of the invention by thermal desorption was similarly investigated. The results obtained are given below in Table III.

**0 042 683**

TABLE III
Percentage recoveries from the traps produced according to
the invention by thermal desorption

| Compound | Mean recovery % | Standard deviation (d.f.: $n-1$) | Number of observations (n) |
|---|---|---|---|
| Halothane | 99 | 3.2 | 67 |
| Dichlorodifluoromethan | 93 | 4.6 | 20 |
| Trichloromonofluoromethane | 98 | 2.3 | 20 |
| Isopropanol | 95 | 4.0 | 15 |
| Nitrous oxide | 96 | 4.8 | 20 |

Example 2

The traps produced according to the invention were also used in a field trial as personal monitors for operating theatre staff on three separate days. The gases which were monitored were halothane, isopropanol and nitrous oxide. The sampling set up, desorption and method of assay of desorbed gases was substantially the same as described previously for the traps produced according to the invention. The results obtained are given below in Table IV.

TABLE IV

| | Staff | Exposure to (in $\mu gl^{-1}$) | | |
|---|---|---|---|---|
| | | Halothane | Isopropanol | $N_2O$ (ppm v/v) |
| Day 1 | Surgeon | 132.9 | — | 300.0 |
| | Student nurse | 21.1 | 37.2 | 156.0 |
| | Runner nurse | 16.6 | 20.6 | 98.7 |
| | Operating dep. Ass. (ODA) | 45.6 | 6.2 | 168.0 |
| | Anaesthetist | 173.0 | 53.4 | 484.5 |
| Day 2 | Surgeon | 55.0 | | 450.0 |
| | Runner nurse | 10.1 | | 79.8 |
| | ODA | 31.2 | | 328.0 |
| | Anaesthetist | 90.0 | | 705.0 |
| Day 3 | Theatre sister | 73.4 | 14.4 | |
| | Anaesthetist | 210.2 | 32.9 | |
| | ODA | 26.7 | | |
| | Student nurse | 11.5 | 3.1 | |
| | Runner nurse | 44.9 | 7.8 | |

**Claims**

1. A process for the production of a re-usable adsorptive trap for monitoring gases and vapours, such trap being of small size suited to carriage on the body for personal use, and which process comprises:

locating particulate adsorbent (3) within an open-ended tube (1), and packing said adsorbent against further movement in said tube between two porous discs (4) rigidly fixed in said tube; characterised in that one of said discs is fixed, said adsorbent is then packed against said one disc by vibration for a predetermined period of time, and thereafter the other of said discs is dropped onto the adsorbent and then fixed to the tube to hold the adsorbent in the state to which it was packed by vibration.

2. A process according to Claim 1 characterised in that said discs are each fixed in said tube with an adhesive.

3. A process according to Claim 2 wherein said tube is of silica or glass, characterised in that said adhesive is of an aqueous silicate form.

4. A process according to Claim 1 characterised in that said discs are each oversized compared to the internal diameter of said tube, and said discs are each fixed in said tube by cooling the disc to contract to fit freely in said tube with securement being effected by subsequent expansion of the disc.

## Patentansprüche

1. Verfahren zum Herstellen wiederverwendbarer adsorptiver Prüfröhrchen für Gase und Dämpfe, die eine geringe Größe aufweisen, so daß sie zum persönlichen Gebrauch am Körper getragen werden können, wobei das Verfahren die Anordnung eines aus Partikel bestehenden Adsorbens (3) innerhalb eines offenendigen Rohres (1) umfaßt, und wobei das Adsorbens gegen weitere Bewegung im Rohr zwischen zwei poröse Scheiben (4) eingebettet wird, die festliegend im Rohr angeordnet sind, dadurch gekennzeichnet, daß eine dieser Scheiben befestigt wird, danach das Adsorbens gegen diese eine Scheibe mittels Vibration für eine vorbestimmte Zeitspanne gepackt bzw. geschüttet wird, und daß danach die andere Scheibe auf das Adsorbens abgesenkt und danach am Rohr befestigt wird, um das Adsorbens in dem Zustand zu halten, in dem es durch Vibration abgepackt wurde.

2. Verfahren nach Anspruch 1, dadurch gekennzeichnet, daß die Scheiben im Rohr jeweils mit einem Klebemittel befestigt sind.

3. Verfahren nach Anspruch 2, wobei das Rohr aus Siliciumoxid oder Glas besteht, dadurch gekennzeichnet, daß das Klebemittel eine wässrige Silikatform ist.

4. Verfahren nach Anspruch 1, dadurch gekennzeichnet, daß die Scheiben jeweils eine Übergröße im Vergleich zum Innendurchmesser des Rohres aufweisen, und daß die Scheiben jeweils im Rohr durch Kühlung befestigt werden, so daß sie sich zusammenziehen und frei in das Rohr eingepaßt werden, wobei die Befestigung durch die anschließende Expansion der Scheiben erfolgt.

## Revendications

1. Procédé de fabrication d'un piège adsorbant réutilisable pour surveiller les gaz et vapeurs, ce piège étant de petites dimensions convenant pour être porté sur le corps en vue d'une utilisation personnelle, ce procédé comprenant: la mise en place d'un adsorbant particulaire (3) au sein d'un tube (1) à extrémités ouvertes, et le tassement de cet adsorbant à l'encontre de tout mouvement ultérieur dans ledit tube, entre deux disques poreux (4) rigidement fixés dans ledit tube; procédé caractérisé en ce qu'on fixe l'un desdits disques, on tasse ensuite ledit adsorbant contre ce disque par vibration pendant une période prédéterminée de temps, puis l'on fait tomber l'autre des disques sur l'adsorbant et on le fixe au tube pour maintenir l'adsorbant dans l'état dans lequel il a été tassé par vibration.

2. Procédé selon la revendication 1, caractérisé en ce qu'on fixe à l'aide d'un adhésif chacun desdits disques dans ledit tube.

3. Procédé selon la revendication 2, dans lequel ledit tube est en silice ou en verre, procédé caractérisé en ce que ledit adhésif est sous forme d'une solution aqueuse de silicate.

4. Procédé selon la revendication 1, caractérisé en ce que lesdits disques sont chacun surdimensionnés par rapport au diamètre interne dudit tube, et l'on fixe chacun des disques dans le tube en refroidissant le disque pour qu'il se contracte afin de s'ajuster librement dans ledit tube, la fixation étant obtenue par une dilatation subséquente du disque.

Fig. 1

Fig. 2

0 042 683